# EUROPÄISCHE PATENTSCHRIFT

(11) **EP 3 748 210 B1**
(45) Veröffentlichungstag und Bekanntmachung des Hinweises auf die Patenterteilung: **04.01.2023**
(21) Anmeldenummer: 19179095.5
(22) Anmeldetag: 07.06.2019
(51) Int. Cl.: F16K 37/00, G01S 7/52, G01S 15/88

(54) **ABSPERRORGAN FÜR EIN FLUID**
BLOCKING STRUCTURE FOR A FLUID
ORGANE D'ARRÊT POUR UN FLUIDE

(43) Veröffentlichungstag der Anmeldung: 09.12.2020
(73) Patentinhaber: FOCUS-ON V.O.F., 3313 LC Dordrecht (NL)
(72) Erfinder: Boer, Adriaan Hendrik, 3363 CN Sliedrecht (NL); Bhangu, Kavreet, 83052 Bruckmühl (DE); van Klooster, Jeroen Martin, 4005 GN Tiel (NL)
(74) Vertreter: Gesthuysen Patentanwälte

(56) Entgegenhaltungen:
- WO-A1-88/03241
- JP-A- 2003 139 589
- US-A- 5 154 080

## Beschreibung

Die Erfindung betrifft ein Absperrorgan für ein Fluid mit einem das Fluid führenden Gehäuse, mit einer in dem Gehäuse vorgesehenen Einströmöffnung für das Fluid und mit einer in dem Gehäuse vorgesehenen Ausströmöffnung für das Fluid, mit einem in dem Gehäuse zwischen der Einströmöffnung und der Ausströmöffnung ausgebildeten Strömungskanal für das Fluid und mit einer in dem Strömungskanal angeordneten Sperrvorrichtung, wobei die Sperrvorrichtung eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Fluid in der Sperrvorrichtung und damit im Strömungskanal veränderbar ist, wobei eine Ultraschall-Messvorrichtung so in oder an dem Gehäuse angeordnet und ausgerichtet ist, dass mit der Ultraschall-Messvorrichtung die Stellposition des Sperrkörpers ermittelbar ist, wobei durch eine Steuer- und/oder Auswerteeinrichtung, wobei die Steuer- und/oder Auswerteeinrichtung die Ultraschall-Messvorrichtung zur Emission eines Sendesignals ansteuert, das Sendesignal an dem Sperrkörper reflektiert wird und die Steuer- und/oder Auswerteeinrichtung das Reflexionssignal erfasst und die Steuer- und/oder Auswerteeinrichtung durch Auswertung zumindest des Reflexionssignals die Stellposition des Sperrkörpers und/oder die Veränderung der Stellposition des Sperrkörpers ermittelt.

Absperrorgane für Fluide, im Wesentlichen also für gasförmige oder flüssige Medien, sind seit langer Zeit in ganz unterschiedlicher technischer Ausführung im Einsatz, sei es in prozesstechnischen Anlagen (z. B. Lebensmittelindustrie, Chemie, Erdölverarbeitung) in Gebäudeinstallationen und beispielsweise auch in der Medizintechnik, in der Fahrzeugtechnik einschließlich Luft- und Raumfahrt. Die Sperrvorrichtungen der Absperrorgane werden häufig automatisiert angesteuert, um den Mengenstrom des durch das Absperrorgan fließenden Fluids im Rahmen einer übergeordneten Steuerung oder Regelung einzustellen. Die Sperrvorrichtung bzw. der Sperrkörper der Sperrvorrichtung wird dann durch eine elektrisch, hydraulische oder pneumatisch angetriebene Stellvorrichtung bewegt. Durch Auslenkung des Sperrkörpers in der Sperrkörperaufnahme des Absperrorgans wird der Strömungsquerschnitt im Bereich der Sperrvorrichtung variiert und mit ihm der Strömungswiderstand, sodass der gewünschte Effekt der Einstellung des Mengenstroms erzielt wird.

Von großem Interesse ist der sichere, zuverlässige und ausfallfreie Betrieb der beschriebenen Absperrorgane, speziell dann, wenn sie einen regelungstechnischen Einsatz haben. In diesem Fall wird beispielsweise die Sperrvorrichtung in besonderem Maße beansprucht, da der Sperrkörper sich in fortwährender Bewegung befinden kann. Die Stellposition des Sperrkörpers lässt sich von außen nur teilweise beurteilen, beispielsweise wenn eine Betätigungsvorrichtung (z. B. in Form eines Stößels) aus dem Gehäuse des Absperrorgans ragt. Einen anderen Hinweis auf die Stellposition des Sperrkörpers kann beispielsweise auch eine elektrische Stellvorrichtung liefern über einen Wegaufnehmer, ein Encoder oder Ähnliches. Jedoch handelt es sich hier immer nur um mittelbare Informationen, die schlussendlich durch verschiedene denkbare Störsituationen fehlerhaft sein können.

Aus dem Stand der Technik ist bekannt, siehe beispielsweise die WO 88/03241 A1, die US 5,154,080 A oder die JP 2003 139589 A, dass eine Ultraschall-Messvorrichtung so in oder an dem Gehäuse angeordnet und ausgerichtet ist, dass mit der Ultraschall-Messvorrichtung die Stellposition des Sperrkörpers ermittelbar ist. Durch die im Innern des Absperrorgans vorgesehene Ultraschall-Messvorrichtung wird ein unmittelbarer messtechnischer Blick auf den Sperrkörper ermöglicht, also auf die Sperrkörperposition im Strömungskanal, also im Fluidstrom. Je nach Ausführung der Sperrvorrichtung, beispielsweise als Ventil mit einem axial bewegten Ventilstößel, der in der Sperrvorrichtung mehr oder weniger parallel zum Mediumstrom bewegt wird, oder bei einer Ausführung der Sperrvorrichtung als Absperrschieber, Absperrklappe oder als Kugelhahn, bei dem der Sperrkörper üblicherweise senkrecht zum Mediumstrom bewegt wird, müssen verschiedene Eigenschaften des Sensorsignals ausgewertet werden, um auf die Stellposition des Sperrkörpers rückschließen zu können.

Bei einer bekannten Ausgestaltung des Absperrorgans ist eine Steuer- und/oder Auswerteeinrichtung vorgesehen, wobei die Steuer- und/oder Auswerteeinrichtung die Ultraschallmessvorrichtung zur Emission eines Sendesignals ansteuert, wobei das Sendesignal aufgrund der Ausrichtung der Ultraschall-Messvorrichtung an dem Sperrkörper reflektiert wird. Die Steuer- und/oder Auswerteeinrichtung erfasst das Reflexionssignal und wertet dieses Reflexionssignal aus, wodurch die Stellposition des Sperrkörpers und/oder die Veränderung der Stellposition des Sperrkörpers, also eine zeitliche Ableitung der Stellposition des Sperrkörpers, ermittelt wird.

Aufgabe der vorliegenden Erfindung ist es daher, ein Absperrorgan für ein Fluid anzugeben, bei dem mit erhöhter Sicherheit die Stellposition des Sperrkörpers festgestellt werden kann.

Die Aufgabe wird gelöst bei dem Absperrorgan gemäß dem Oberbegriff von Patentanspruch 1 durch die Merkmale des Kennzeichnungsteils von Patentanspruch 1.

Bei einer bevorzugten Ausgestaltung ist vorgesehen, dass die Ultraschall-Messvorrichtung einen als Sender und Empfänger ausgebildeten Ultraschallwandler aufweist. Diese Variante stellt die einfachste Realisierung der Ultraschall-Messvorrichtung dar. Sie hat insbesondere den Vorteil, dass das Sendesignal und das Reflexionssignal praktisch den gleichen Weg in dem Strömungskanal durchmessen, jedoch in unterschiedlicher Richtung, sodass sich Mitführeffekte aufgrund der Fluidgeschwindigkeit automatisch herausmitteln.

Bei einer alternativen Ausgestaltung des Absperrorgans bzw. der in dem Absperrorgan angeordneten Ultraschall-Messvorrichtung ist vorgesehen, dass die Ultraschall-Messvorrichtung einen als Sender und/oder Empfänger ausgebildeten Ultraschallwandler und einen weiteren, davon separaten, als Empfänger und/oder Sender ausgebildeten Ultraschallwandler aufweist. Diese Realisierung ist aufwendiger als die zuvor vorgeschlagene Realisierung der Ultraschall-Messvorrichtung. Die Wahl einer solchen Realisierung kann jedoch dann sinnvoll sein, wenn sich eine Reflexion des Sendesignals durch den Sperrkörper - aus welchem Grund auch immer - nicht zurück auf den Sendeort realisieren lässt.

Wie schon angedeutet worden ist, können verschiedene Eigenschaften des Reflexionssignals ausgewertet werden. Die Stellposition des Sperrkörpers kann von der Steuer- und/oder Auswerteeinrichtung beispielsweise ermittelt werden durch Auswertung der Intensität des Reflexionssignals. Hierzu kann insbesondere berücksichtigt werden die Intensität des Sendesignals, die üblicherweise bekannt ist, da die Intensität des Sendesignals durch die Steuer- und/oder Auswerteeinrichtung sehr genau vorgegeben werden kann. Die Intensität des Reflexionssignals ist insbesondere dann eine interessante Größe, wenn die sich der Sperrkörper der Sperrvorrichtung senkrecht in den Fluidstrom hineinbewegt, sodass die durchströmte Öffnung je nach Position des Sperrkörpers mehr oder weniger groß ist. Wenn die Ultraschall-Messvorrichtung so ausgerichtet ist, dass das Sendesignal praktisch mit dem Fluidstrom zur Sperrvorrichtung läuft, dann ändert sich der Abstand des Sperrkörpers von dem Sendeort der Ultraschall-Messvorrichtung nicht. Je nach Stellposition des Sperrkörpers ändert sich lediglich der Anteil des Sendesignals, der reflektiert wird und damit ändert sich die Intensität des Reflexionssignals. Die Intensität des Reflexionssignals kann beispielsweise durch Auswertung des Amplitude des Reflexionssignals ermittelt werden.

Bei anderen Realisierungen der Sperrvorrichtung ändert sich typischerweise der Abstand zwischen dem Sendeort der Ultraschall-Messvorrichtung und dem Sperrkörper der Sperrvorrichtung je nach Stellposition des Sperrkörpers. Dies trifft beispielsweise auf Ventillösungen zu, bei denen sich ein Verschlussteil linear in Richtung auf einen Dichtungssitz zu oder von dem Dichtungssitz wegbewegen lässt. Konstruktionsbedingt erfolgt die Bewegung des Sperrkörpers dann im Wesentlichen in Richtung des Fluidstroms. Wenn die Ultraschall-Messvorrichtung auf einen solchen Sperrkörper ausgerichtet ist, verändert sich mit der Stellposition des Sperrkörpers der Abstand vom Sendeort der Ultraschall-Messvorrichtung zu dem Sperrkörper, sodass sich eine Abstandsmessung zur Ermittlung der Stellposition des Sperrkörpers anbietet. In diesem Fall erfolgt die Auswertung des Reflexionssignals durch die Steuer- und/oder Auswerteeinrichtung durch Laufzeitmessung, durch Ermittlung der Phasendifferenz zwischen Sendesignal und Reflexionssignal oder durch Ermittlung der Frequenzdifferenz zwischen Sendesignal und Reflexionssignal. Je nach ausgesendetem Sendesignal (es kann sich beispielsweise um ein moduliertes harmonisches Signal handeln) stehen die genannten Größen über eine zeitliche Ableitung mit der Stellposition des Sperrkörpers in Zusammenhang und geben daher möglicherweise nicht unmittelbar Auskunft über die Stellposition, sondern beispielsweise über die Geschwindigkeit des Sperrkörpers Auskunft. Dies trifft beispielsweise zu bei einem Sendesignal mit konstanter Frequenz, bei dem die Frequenzdifferenz zum Empfangssignal ausgewertet wird (Dopplereffekt). In derartigen Fällen muss das Messsignal entsprechend mathematisch behandelt werden, um die Stellposition des Sperrkörpers zu erhalten.

Bei einer weiteren bevorzugten Ausgestaltung des Absperrorgans ist vorgesehen, dass die Steuer- und/oder Auswerteinrichtung die Ultraschall-Messvorrichtung zur Emission eines Sendesignals hoher Intensität ansteuert zwecks Reinigung der Sperrvorrichtung, insbesondere zur Reinigung des Sperrkörpers der Sperrvorrichtung.

Eine weitere bevorzugte Ausgestaltung des erfindungsgemäßen Absperrorgans zeichnet sich dadurch aus, dass die von der Steuer- und/oder Auswerteeinrichtung ermittelte Stellposition des Sperrkörpers von der Steuer- und/oder Auswerteeinrichtung verglichen wird mit einer Vergleichsstellposition des Sperrkörpers. Dies ist insbesondere dann sinnvoll, wenn es einen Erwartungswert für die Abweichung zwischen der ermittelten Stellposition und der Vergleichsstellposition gibt. Bei einer - zu großen - Abweichung kann die Steuer- und/oder Auswerteeinrichtung ein Diagnosesignal absetzen (beispielsweise auf einem Display zur Anzeige bringen oder über einen Feldbus an eine entfernte Leitwarte melden). Besonders sinnfällig ist die Vorgehensweise, wenn die Vergleichsstellposition erwartungsgemäß der ermittelten Stellposition des Sperrkörpers entsprechen soll. Dies ist dann der Fall, wenn die Vergleichsstellposition des Sperrkörpers eine Sollposition des Sperrkörpers ist - und die demzufolge von der Steuer- und/oder Auswerteeinrichtung hatte eingestellt werden sollen - oder wenn die Vergleichsstellposition eine auf anderem Wege messtechnisch ermittelte Stellposition des Sperrkörpers ist. Diese könnte beispielsweise von einem Stellantrieb für den Sperrkörper stammen (linearer Wegaufnehmer, Encoder oder Steuerimpulse bei einem Schrittmotorantrieb usw.). Durch die beschriebenen Maßnahmen ist es möglich, Fehlfunktionen zu ermitteln und eine Diagnose des Absperrorgans durchzuführen.

Speziell dann, wenn die Stellposition des Sperrkörpers durch eine Ultraschall-Entfernungsmessung ermittelt wird, ist zu berücksichtigen, dass die Schallgeschwindigkeit - und damit auch die Ausbreitungsgeschwindigkeit des Ultraschall-Sendesignals und des Reflexionssignals - von verschiedenen Faktoren abhängt, die in sehr unterschiedlichem Maße Einfluss auf die Schallgeschwindigkeit haben.

Die erfindungsgemäße Lösung besteht darin, dass die Steuer- und/oder Auswerteeinrichtung zur Ermittlung der Stellposition des Sperrkörpers die Schallgeschwindigkeit in dem Fluid durch eine Messung mit Ultraschallsignalen in dem in dem Gehäuse geführten Fluid selbst ermittelt. Diese Lösung ist deshalb interessant, weil bei einer Messung unmittelbar die Schallgeschwindigkeit resultiert und keine Annahmen über mehr oder weniger bedeutsame physikalische Effekte gemacht werden müssen. Die messtechnische Lösung zur Ermittlung der Schallgeschwindigkeit in dem Fluid ist auch speziell dann interessant, wenn schon bestimmte Vorrichtungen in dem Absperrorgan existieren, mit deren Hilfe ohne Weiteres auch eine Messung der Schallgeschwindigkeit durchgeführt werden kann; hierauf wird weiter unten noch eingegangen.

Erfindungsgemäß ist vorgesehen, dass zur Ermittlung der Schallgeschwindigkeit in dem in dem Gehäuse geführten Fluid ein Kalibrier-Messpfad in dem Strömungskanal ausgebildet ist. Gegenständliche Elemente des Kalibrier-Messpfades sind wenigstens ein Kalibrier-Ultraschallsender und wenigstens ein Kalibrier-Ultraschallempfänger. In einer bevorzugten Ausgestaltung umfasst der Kalibrier-Messpfad auch wenigstens einen Kalibrier-Reflektor. Der Kalibrier-Ultraschallsender und der Kalibrier-Ultraschallempfänger sind jeweils die gegenständlichen Endpunkte des Kalibrier-Messpfades. Der Kalibrier-Messpfad an sich ist sonst nicht gegenständlich, er ist vielmehr der geometrisch Weg des Ultraschallnutzsignals für die Messung. Der Kalibrier-Reflektor dient zur Signalumlenkung im Kalibrier-Messpfad. Damit die Schallgeschwindigkeit in dem Fluid zuverlässig bestimmt werden kann, muss der Kalibrier-Messpfad unabhängig von der Stellposition des Sperrkörpers sein und der Kalibrier-Messpfad muss von einem Ultraschall-Messsignal in beiden möglichen Durchlaufungsrichtungen des Kalibrier-Messpfades durchlaufen werden. Denn nur so ist gewährleistet, dass sich etwaige Mitführeffekte durch das strömende Fluid aufheben.

Bei einer ersten Ausgestaltung zur Realisierung des Kalibrier-Messpfades ist vorgesehen, dass der als Sender ausgebildete Ultraschallwandler der Ultraschall-Messvorrichtung den Kalibrier-Ultraschallsender bildet und dass der als Empfänger ausgebildete Ultraschallwandler der Ultraschall-Messvorrichtung den Kalibrier-Ultraschallempfänger bildet. Vorteil dieser Realisierung ist, dass zur Realisierung des Kalibrier-Messpfades - jedenfalls zum Senden und Empfangen von Ultraschallsignalen - keine gerätetechnischen Maßnahmen getroffen werden müssen, die sich nicht mit der Ultraschall-Messvorrichtung umsetzen lassen. Als zusätzliche Maßnahme ist lediglich vorgesehen, dass der Kalibrier-Reflektor benachbart zur Sperrvorrichtung angeordnet ist, sodass der Kalibrier-Reflektor zumindest einen Teil des von dem Kalibrier-Ultraschallsender emittierten Sendesignals zu dem Kalibrier-Ultraschallempfänger reflektiert. Unter diesem Aspekt ist der Begriff "benachbart" zu verstehen. Das von dem Kalibrier-Ultraschallsender emittierte Sendesignal wird also zum Teil von dem Sperrkörper reflektiert und zu einem anderen Teil von dem Kalibrier-Reflektor reflektiert. Der Kalibrier-Ultraschallempfänger empfängt beide Reflexionssignale und wertet diese aus. Die Schallgeschwindigkeit im Fluid kann bei jeder Messung ausgewertet werden, sie kann aber auch nur bei Bedarf ausgewertet werden. Die Schallgeschwindigkeit im Fluid ergibt sich jedenfalls aus dem Quotienten aus der bekannten Länge des Kalibrier-Messpfades (Kalibrier-Ultraschallsender - Kalibrier-Reflektor - Kalibrier-Ultraschallempfänger) und der gesamten Signallaufzeit für den Kalibrier-Messpfad. Mit der nun bekannten Schallgeschwindigkeit kann zuverlässig der Abstand des Sperrkörpers von der Ultraschallmessvorrichtung bestimmt werden. Dieser Abstand ist das Produkt der Schallgeschwindigkeit mit der halben gemessenen Signallaufzeit auf dem Weg Kalibrier-Ultraschallsender - Sperrkörper - Kalibrier-Ultraschallempfänger.

Bei einer zweiten, alternativen Ausgestaltung zur Realisierung des Kalibrier-Messpfades ist vorgesehen, dass der Kalibrier-Ultraschallsender und der Kalibrier-Ultraschallempfänger durch jeweils einen als Sender und Empfänger ausgebildeten Ultraschallwandler gebildet werden, wobei der Kalibrier-Ultraschallsender und der Kalibrier-Ultraschallempfänger verschieden sind von, also zusätzlich vorgesehen sind zu den Ultraschallwandlern der Ultraschall-Messvorrichtung. Hier ist zwar der gerätetechnische Aufwand größer, dafür bieten sich aber andere Vorteile. Zum einen lässt sich der Kalibrier-Messpfad entfernt von der Sperrvorrichtung realisieren, beispielsweise in einem Bereich des Strömungskanals mit einem im Vergleich zur Strömung im Bereich der Sperrvorrichtung ruhigeren Strömungsverlauf mit weniger Turbulenzen, was der Messgenauigkeit zuträglich ist. Zum anderen lässt sich zur Anregung und Auswertung der Ultraschallsignale des Kalibrier-Messpfades die ohnehin schon vorhandene Steuer- und/oder Auswertevorrichtung nutzen, es muss also praktisch kein zusätzlicher Aufwand für die Signalverarbeitung betrieben werden. Es gibt noch einen weiteren gravierenden Vorteil, der anhand der nachfolgenden Ausführungsbeispiele deutlich wird.

Ein erstes Ausführungsbeispiel zeichnet sich dadurch aus, dass der Kalibrier-Ultraschallsender und der Kalibrier-Ultraschallempfänger einen geradlinigen Kalibrier-Messpfad im Einlaufbereich, also zwischen der Einströmöffnung und der Sperrvorrichtung, oder im Auslaufbereich, also zwischen der Sperrvorrichtung und der Ausströmöffnung des Strömungskanals bilden. Der Kalibrier-Ultraschallsender und der Kalibrier-Ultraschallempfänger stehen sich also gegenüber. Bevorzugt durchmisst der geradlinige Kalibrier-Messpfad den Strömungskanal so, dass er das Zentrum des Strömungsquerschnittes durchläuft oder jedenfalls zentrumnah verläuft; so wird ein möglichst großer Querschnitt des Strömungskanals messtechnisch erfasst.

Ein weiteres Ausführungsbeispiel zeichnet sich dadurch aus, dass der Kalibrier-Ultraschallsender, der Kalibrier-Ultraschallempfänger und der Kalibrier-Reflektor einen V-förmigen Kalibrier-Messpfad im Einlaufbereich, also zwischen der Einströmöffnung und der Sperrvorrichtung, oder im Auslaufbereich, also zwischen der Sperrvorrichtung und der Ausströmöffnung des Strömungskanals bilden. Vorzugsweise durchmisst der V-förmige Kalibrier-Messpfad den Strömungskanal so, dass die Schenkel des Kalibrier-Messpfades das Zentrum des Strömungsquerschnittes durchlaufen oder jedenfalls zentrumnah verlaufen; so wird ein möglichst großer Querschnitt des Strömungskanals messtechnisch erfasst.

Ein besonderer Vorteil ergibt sich bei einer Weiterbildung des Absperrorgans dann, wenn die Steuer- und/oder Auswerteeinrichtung über den Kalibrier-Messpfad eine Laufzeitmessung durchführt und mittels der Laufzeitmessung die Strömungsgeschwindigkeit bestimmt. So wird ohne zusätzlichen gerätetechnischen Aufwand ein Absperrorgan mit einem integrierten Durchflussmessgerät realisiert. Die Steuer- und/oder Auswerteeinrichtung stellt dabei bevorzugt einen Messkanal zur Verfügung, über den die Schallgeschwindigkeit, der Durchfluss und die Stellposition des Sperrkörpers ermitttelt werden können.

Dann ist es auch vorteilhaft, wenn der Kalibrier-Ultraschallsender gleichzeitig auch als Kalibrier-Ultraschallempfänger ausgebildet ist und der Kalibrier-Ultraschallempfänger auch gleichzeitig als Kalibrier-Ultraschallsender ausgeführt ist. Dann können Messsignale so ausgesendet und empfangen werden, dass sie den Kalibrier-Messpfad in den beiden möglichen, entgegengesetzten Durchlaufungsrichtungen durchlaufen können, also beispielsweise einmal mit der Strömungsrichtung und einmal entgegen der Strömungsrichtung des Mediums, wenn der Kalibrier-Messpfad eine Wegkomponente in Strömungsrichtung hat.

Wie erläutert, gibt es verschiedene Möglichkeiten, das erfindungsgemäße Absperrorgan auszugestalten und weiterzubilden, wie es in den dem Patentanspruch 1 nachgeordneten Patentansprüchen beschrieben ist. Bevorzugte Ausführungsbeispiele werden nachfolgend anhand der der Zeichnung beschrieben. In der Zeichnung zeigen
- Fig. 1: ein erstes Ausführungsbeispiel eines nicht erfindungsgemäßen Absperrorgans mit einer Ultraschall-Messvorrichtung,
- Fig. 2: ein Ausführungsbeispiel eines erfindungsgemäßen Absperrorgans mit einer Ultraschall-Messvorrichtung und einem Kalibrier-Messpfad und
- Fig. 3: ein Ausführungsbeispiel eines erfindungsgemäßen Absperrorgans mit einer Ultraschall-Messvorrichtung und einem Kalibrier-Messpfad, wobei der Kalibrier-Messpfad auch zur Messung des Volumenstroms dient.

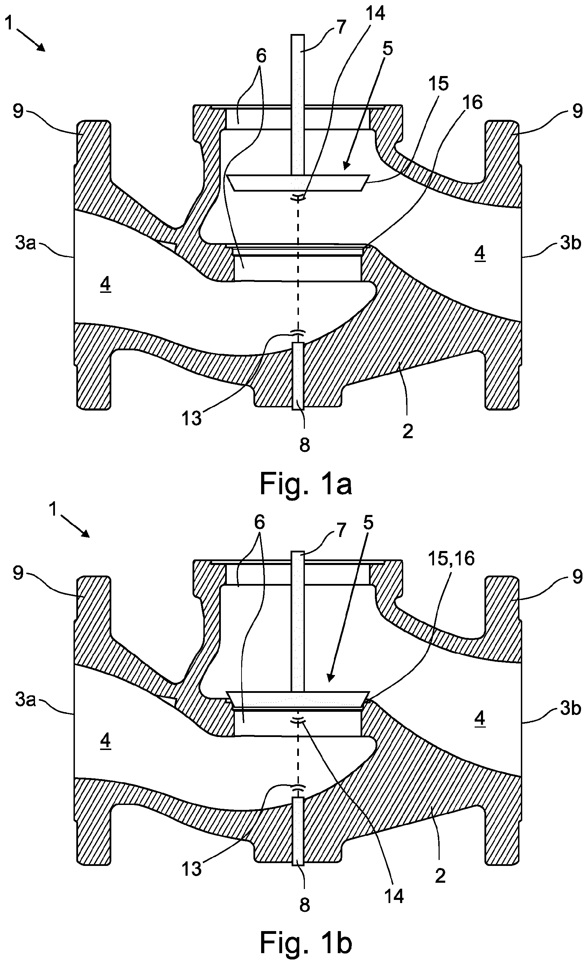

In den Fig. 1 bis 3 ist jeweils ein Absperrorgan 1 für ein Fluid dargestellt mit einem das Fluid führenden Gehäuse 2, mit einer in dem Gehäuse 2 vorgesehenen Einströmöffnung 3a für das Fluid und mit einer in dem Gehäuse 2 vorgesehenen Ausströmöffnung 3b für das Fluid, mit einem in dem Gehäuse 2 zwischen der Einströmöffnung 3a und der Ausströmöffnung 3b ausgebildeten Strömungskanal 4 für das Fluid und mit einer in dem Strömungskanal 4 angeordneten Sperrvorrichtung 5. In den dargestellten Ausführungsbeispielen verläuft die Strömungsrichtung also von links nach rechts. Die Sperrvorrichtung 5 weist eine Sperrkörperaufnahme 6 und einen in der Sperrkörperaufnahme 6 beweglichen Sperrkörper 7 auf. Durch Bewegen des Sperrkörpers 7 in der Sperrkörperaufnahme 6 ist der Strömungsquerschnitt für das Fluid in der Sperrvorrichtung 5 und damit im Strömungskanal 4 veränderbar. In den dargestellten Ausführungsbeispielen erhält der Strömungsverlauf in der Sperrvorrichtung 5 eine vertikale Komponente, die in den Figuren von unten nach oben gerichtet ist. Im Bereich der Einströmöffnung 3a und der Ausströmöffnung 3b sind Flanschanschlüsse 9 vorgesehen, mit denen das Absperrorgan an einen externen Prozess angeschlossen werden kann.

In allen Ausführungsbeispielen ist eine Ultraschall-Messvorrichtung 8 so in dem Gehäuse, hier in einer Außenwandung des Gehäuses, angeordnet und ausgerichtet, dass mit der Ultraschall-Messvorrichtung 8 die Stellposition des Sperrkörpers 7 ermittelbar ist. Durch die Ausrichtung der Ultraschall-Messvorrichtung 8 auf den Sperrkörper 7, hier insbesondere auf die Dichtkomponente des Sperrkörpers 7, ist eine unmittelbare messtechnische Beurteilung der Stellposition des Sperrkörpers 7 möglich. Die Messung der Stellposition des Sperrkörpers 7 erfolgt also aus dem Inneren des Absperrorgans 1, also aus dem Strömungskanal 4.

Fig. 1a und 1b zeigen, wie der Sperrkörper 7 in der Sperrkörperaufnahme 6 beweglich gelagert ist, hier in Form einer Linearbewegung, in den Ausführungsbeispielen ist diese vertikal orientiert. In Fig. 1a ist der Strömungsweg in der Sperrvorrichtung 5 freigegeben, in Fig. 1b ist der Strömungsweg durch die Sperrvorrichtung 5 geschlossen, so dass ein Mengenfluss durch das Absperrorgan 1 vollständig unterbunden wird.

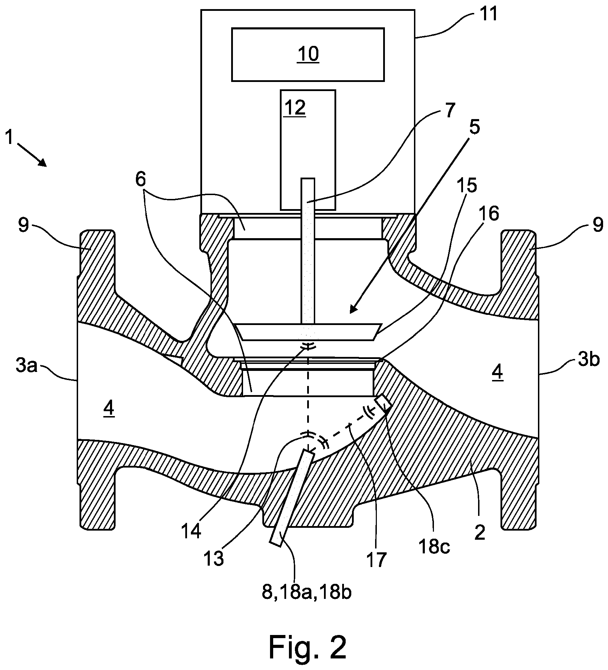

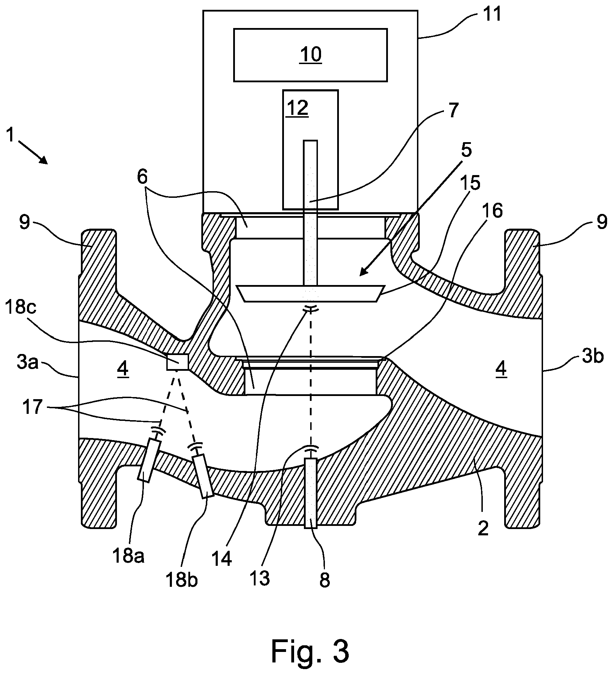

In Fig. 2 und Fig. 3 ist gezeigt, dass das Absperrorgan 1 mit einer Steuer- und/oder Auswerteeinrichtung 10 ausgestattet ist. Die Steuer- und/oder Auswerteeinrichtung 10 ist hier in einer Gehäuseergänzung 11 des Gehäuses 2 untergebracht, in der auch ein Stellantrieb 12 für den Sperrkörper 7 der Sperrvorrichtung 5 angeordnet ist.

Die Steuer- und/oder Auswerteeinrichtung 10 steuert die Ultraschall-Messvorrichtung 8 zur Emission eines Sendesignals 13 an. Das Sendesignal 13 wird an dem Sperrkörper 7 reflektiert und die Steuer- und/oder Auswerteeinrichtung 10 erfasst das Reflexionssignal 14. Dann ermittelt die Steuer- und/oder Auswerteeinrichtung 10 durch Auswertung zumindest des Reflexionssignals 14 die Stellposition des Sperrkörpers 7.

In allen dargestellten Ausführungsbeispielen weist die Ultraschall-Messvorrichtung 8 einen als Sender und Empfänger ausgebildeten Ultraschallwandler auf. Diese Ausgestaltung ist immer dann möglich, wenn sichergestellt werden kann, dass das Reflexionssignal 14 zurück zum Sendeort reflektiert werden kann. Alternativ kann die Ultraschall-Messvorrichtung 8 einen als Sender ausgebildeten Ultraschallwandler und einen davon separaten, als Empfänger ausgebildeten Ultraschallwandler aufweisen; dies ist hier jedoch nicht dargestellt.

Die in den Figuren 2 und 3 dargestellten Steuer- und/oder Auswerteeinrichtungen 10 sind so ausgestaltet, dass die Stellposition des Sperrkörpers 7 von ihr durch Messung der Laufzeit von Sendesignal 13 und Reflexionssignal 14 ermittelt wird. Vorliegend ist die Steuer- und/oder Auswerteeinrichtung 10 mit einem digitalen Signalprozessor realisiert. In den Figuren ist im Einzelnen nicht dargestellt, wie die Ultraschall-Messvorrichtung 8 mit der Steuer- und/oder Auswerteeinrichtung 10 verbunden ist. Selbstverständlich muss aber eine Signalverbindung zwischen der Ultraschall-Messvorrichtung 8 und der Steuer- und/oder Auswerteeinrichtung 10 bestehen. Wie diese im Einzelnen realisiert ist, ist hier aber nicht von Interesse.

Ferner sind die in den Figuren 2 und 3 dargestellten Steuer- und/oder Auswerteeinrichtungen 10 so ausgestaltet, dass sie die von ihnen ermittelte Stellposition des Sperrkörpers 7 mit einer Vergleichsstellposition des Sperrkörpers 7 vergleichen, wobei die Vergleichsstellposition des Sperrkörpers 7 eine Sollposition des Sperrkörpers 7 ist. Die Sollposition wird in Fig. 3 von der Steuer- und/oder Auswerteeinrichtung 10 durch Berechnung eines Regelalgorithmus selbstständig berechnet. In Fig. 2 erhält die Steuer- und/oder Auswerteeinrichtung 10 die Sollposition von extern, nämlich von einer übergeordneten Leitwarte, die hier nicht dargestellt ist.

In den in den Fig. 1 bis 3 dargestellten Ausführungsbeispielen ist die Sperrvorrichtung 5 als Ventil ausgebildet mit einem axial beweglichen Verschlussteil mit einer Dichtfläche 15 als Sperrkörper 7 und mit einem in der Sperrkörperaufnahme 6 ausgebildeten Dichtungssitz 16 zur Abdichtung mit der Dichtfläche 15 des Sperrkörpers 7 im geschlossenen Zustand.

In Fig. 1 ist die Steuer- und/oder Auswerteeinrichtung aus Platzgründen nicht dargestellt, gleichwohl könnte diese so zusätzlich vorgesehen sein, wie dies in den Fig. 2 und 3 dargestellt ist. In diesem Fall würde die Steuer- und/oder Auswerteeinrichtung zur Ermittlung der Stellposition des Sperrkörpers 7 einen von extern vorgegebenen Wert für die Schallgeschwindigkeit in dem Fluid verwenden, da hier keine von der Stellposition des Sperrkörpers 7 unabhängige Möglichkeit besteht, die Schallgeschwindigkeit zu bestimmen. Hierzu müsste die Distanz zwischen der Ultraschall-Messvorrichtung 8 und dem Sperrkörper 7 als bekannt vorausgesetzt werden.

Bei den Ausführungsbeispielen in den Fig. 2 und 3 ermittelt die Steuer- und/oder Auswerteeinrichtung 10 zur Ermittlung der Stellposition des Sperrkörpers 7 die Schallgeschwindigkeit in dem Fluid durch eine Messung mit Ultraschallsignalen in dem in dem Gehäuse 2 geführten Fluid selbst. Dies wird dadurch ermöglicht, dass zur Ermittlung der Schallgeschwindigkeit in dem in dem Gehäuse 2 geführten Fluid ein Kalibrier-Messpfad 17 in dem Strömungskanal 4 ausgebildet ist, mit einem Kalibrier-Ultraschallsender 18a, einem Kalibrier-Ultraschallempfänger 18b und mit einem Kalibrier-Reflektor 18c, wobei der Kalibrier-Messpfad 17 unabhängig von der Stellposition des Sperrkörpers 7 ist und der Kalibrier-Messpfad 17 von einem Messsignal in beiden möglichen Durchlaufungsrichtungen durchlaufen wird.

Das Ausführungsbeispiel gemäß Fig. 2 zeichnet sich dadurch aus, dass der als Sender ausgebildete Ultraschallwandler der Ultraschall-Messvorrichtung 5 den Kalibrier-Ultraschallsender 18a bildet, dass der als Empfänger ausgebildete Ultraschallwandler der Ultraschall-Messvorrichtung 5 den Kalibrier-Ultraschallempfänger 18b bildet und dass der Kalibrier-Reflektor 18c benachbart zur Sperrvorrichtung 5 angeordnet ist, sodass der Kalibrier-Reflektor 18c zumindest einen Teil des von dem Kalibrier-Ultraschallsender 18a emittierten Sendesignals 13 zu dem Kalibrier-Ultraschallempfänger 18b reflektiert. Dazu kommt, dass in Fig. 2 der Kalibrier-Ultraschallsender 18a und der Kalibrier-Ultraschallempfänger 18b als gemeinsamer Ultraschallsender- und -empfänger ausgebildet sind. Diese Lösung hat einen sehr geringen gerätetechnischen Aufwand. Als Randbedingung muss sich aber erfüllen lassen, dass der Sperrkörper 7 und der Kalibrier-Reflektor 18c in unmittelbarer Nachbarschaft anordenbar sind, damit beide Elemente vom Ort des Ultraschallsenders gemeinsam mit einem Sendesignal 14 bzw. mit einem Messsignal beaufschlagt werden können. Der Kalibrier-Reflektor 18c muss sich auch so ausrichten lassen, dass er sein Reflexionssignal in Richtung auf den Ultraschallsender zurückreflektiert.

Das Ausführungsbeispiel gemäß Fig. 3 ist hinsichtlich des Kalibrier-Messpfades 17 anders ausgestaltet. Der Kalibrier-Ultraschallsender 18a und der Kalibrier-Ultraschallempfänger 18b werden hier durch jeweils einen als Sender und Empfänger ausgebildeten Ultraschallwandler gebildet, wobei der Kalibrier-Ultraschallsender 18a und der Kalibrier-Ultraschallempfänger 18b verschieden sind von Ultraschallwandlern der Ultraschall-Messvorrichtung 5. Diese Lösung ist gerätetechnisch aufwendiger als die in Fig. 2 dargestellte Variante, sie weist jedoch andere erhebliche Vorteile auf, beispielsweise den, dass der Kalibrier-Messpfad 17 entfernt von der Sperrvorrichtung 5 realisiert werden kann. In Fig. 3 ist dies im Bereich zwischen der Einströmöffnung 3a und der Sperrvorrichtung 5, weil hier die Strömung weniger gestört ist als im Bereich der Sperrvorrichtung 5.

Ein weiterer Vorteil ergibt sich bei dem Ausführungsbeispiel gemäß Fig. 3 dadurch, dass die Steuer- und/oder Auswerteeinrichtung 10 so ausgestaltet ist, dass sie über den Kalibrier-Messpfad 17 eine Laufzeitmessung durchführt und mittels der Laufzeitmessung die Strömungsgeschwindigkeit des Fluids im Strömungskanal 4 bestimmt. Dadurch wird also gleichzeitig eine Durchflussmessung realisiert. Das so ausgestaltete Absperrorgan 1 eignet sich demzufolge besonders für regelungstechnische Zwecke, bei denen die Regelgröße der Durchfluss ist.

In Fig. 3 bilden der Kalibrier-Ultraschallsender 18a, der Kalibrier-Ultraschallempfänger 18b und der Kalibrier-Reflektor 18c einen V-förmigen Kalibrier-Messpfad 17 im Einlaufbereich, also zwischen der Einströmöffnung 3a und der Sperrvorrichtung 5. Diese Konfiguration des Messpfades hat sich als besonders geeignet für Durchflussanwendungen mit Absperrorganen herausgestellt.

### Bezugszeichen

- 1: Absperrorgan
- 2: Gehäuse
- 3a: Einströmöffnung
- 3b: Ausströmöffnung
- 4: Strömungskanal
- 5: Sperrvorrichtung
- 6: Sperrkörperaufnahme
- 7: Sperrkörper
- 8: Ultraschall-Messvorrichtung
- 9: Flansche
- 10: Steuer- und/oder Auswerteeinrichtung
- 11: Gehäuseergänzung
- 12: Stellantrieb
- 13: Sendesignal
- 14: Reflexionssignal
- 15: Dichtfläche
- 16: Dichtungssitz
- 17: Kalibrier-Messpfad
- 18a: Kalibrier-Ultraschallsender
- 18b: Kalibrier-Ultraschallempfänger
- 18c: Kalibrier-Reflektor

## Patentansprüche

1. Absperrorgan (1) für ein Fluid mit einem das Fluid führenden Gehäuse (2), mit einer in dem Gehäuse (2) vorgesehenen Einströmöffnung (3a) für das Fluid und mit einer in dem Gehäuse (2) vorgesehenen Ausströmöffnung (3b) für das Fluid, mit einem in dem Gehäuse (2) zwischen der Einströmöffnung (3a) und der Ausströmöffnung (3b) ausgebildeten Strömungskanal (4) für das Fluid und mit einer in dem Strömungskanal (4) angeordneten Sperrvorrichtung (5), wobei die Sperrvorrichtung (5) eine Sperrkörperaufnahme (6) und einen in der Sperrkörperaufnahme (6) beweglichen Sperrkörper (7) aufweist, wobei durch Bewegen des Sperrkörpers (7) in der Sperrkörperaufnahme (6) der Strömungsquerschnitt für das Fluid in der Sperrvorrichtung (5) und damit im Strömungskanal (4) veränderbar ist, wobei eine Ultraschall- Messvorrichtung (8) so in oder an dem Gehäuse (2) angeordnet und ausgerichtet ist, dass mit der Ultraschall-Messvorrichtung (8) die Stellposition des Sperrkörpers (7) ermittelbar ist, wobei durch eine Steuer- und/oder Auswerteeinrichtung (10), wobei die Steuer- und/oder Auswerteeinrichtung (10) die Ultraschall-Messvorrichtung (8) zur Emission eines Sendesignals (13) ansteuert, das Sendesignal (13) an dem Sperrkörper (7) reflektiert wird und die Steuer- und/oder Auswerteeinrichtung (10) das Reflexionssignal (14) erfasst und die Steuer- und/oder Auswerteeinrichtung (10) durch Auswertung zumindest des Reflexionssignals (14) die Stellposition des Sperrkörpers (7) und/oder die Veränderung der Stellposition des Sperrkörpers (7) ermittelt,
**dadurch gekennzeichnet,**
**dass** die Steuer- und/oder Auswerteeinrichtung (10) zur Ermittlung der Stellposition des Sperrkörpers (7) die Schallgeschwindigkeit in dem Fluid durch eine Messung mit Ultraschallsignalen in dem in dem Gehäuse (2) geführten Fluid selbst ermittelt, wobei zur Ermittlung der Schallgeschwindigkeit in dem in dem Gehäuse geführten Fluid ein Kalibrier-Messpfad (17) in dem Strömungskanal (4) ausgebildet ist, mit wenigstens einem Kalibrier-Ultraschallsender (18a), wenigstens einem Kalibrier-Ultraschallempfänger (18b) und vorzugsweise wenigstens einem Kalibrier-Reflektor (18c), wobei der Kalibrier-Messpfad (17) unabhängig von der Stellposition des Sperrkörpers (7) ist und der Kalibrier-Messpfad (17) von einem Messsignal in beiden möglichen Durchlaufungsrichtungen durchlaufen wird.

2. Absperrorgan (1) nach Anspruch 1, **dadurch gekennzeichnet, dass** die Ultraschall-Messvorrichtung (8) einen als Sender und Empfänger ausgebildeten Ultraschallwandler aufweist oder dass die Ultraschall-Messvorrichtung (8) einen als Sender ausgebildeten Ultraschallwandler und einen davon separaten, als Empfänger ausgebildeten Ultraschallwandler aufweist.

3. Absperrorgan (1) nach Anspruch 1 oder 2, **dadurch gekennzeichnet, dass** die Stellposition des Sperrkörpers (7) von der Steuer- und/oder Auswerteeinrichtung (10) ermittelt wird durch Auswertung der Intensität des Reflexionssignals (14), durch Laufzeitmessung, durch Ermittlung der Phasendifferenz zwischen Sendesignal (13) und Reflexionssignal (14) oder durch Ermittlung der Frequenzdifferenz zwischen Sendesignal (13) und Reflexionssignal (14).

4. Absperrorgan (1) nach einem der Ansprüche 1 bis 3, **dadurch gekennzeichnet, dass** die Steuer- und/oder Auswerteeinrichtung (10) die Ultraschall-Messvorrichtung (8) zur Emission eines Sendesignals (13) hoher Intensität ansteuert zur Reinigung der Sperrvorrichtung (5), insbesondere zur Reinigung des Sperrkörpers (7) der Sperrvorrichtung (5).

5. Absperrorgan (1) nach einem der Ansprüche 1 bis 4, **dadurch gekennzeichnet, dass** die von der Steuer- und/oder Auswerteeinrichtung (10) ermittelte Stellposition des Sperrkörpers (7) von der Steuer- und/oder Auswerteeinrichtung (10) verglichen wird mit einer Vergleichsstellposition des Sperrkörpers (7), insbesondere wobei die Vergleichsstellposition des Sperrkörpers (7) eine Sollposition des Sperrkörpers (7) oder eine auf anderem Wege ermittelte Stellposition des Sperrkörpers (7) ist.

6. Absperrorgan (1) nach einem der Ansprüche 1 bis 5, **dadurch gekennzeichnet, dass** die Sperrvorrichtung (5) als Ventil ausgebildet ist mit einem axial beweglichen Verschlussteil mit einer Dichtfläche (15) als Sperrkörper (7) und mit einem in der Sperrkörperaufnahme (6) ausgebildeten Dichtungssitz (16) zur Abdichtung mit der Dichtfläche (15) des Sperrkörpers (7) im geschlossenen Zustand oder dass die Sperrvorrichtung (5) als Absperrschieber, Absperrklappe oder als Kugelhahn ausgebildet ist.

7. Absperrorgan (1) nach einem der Ansprüche 1 bis 6, **dadurch gekennzeichnet, dass** der als Sender ausgebildeten Ultraschallwandler der Ultraschall-Messvorrichtung (8) den Kalibrier-Ultraschallsender (18a) bildet, dass der als Empfänger ausgebildete Ultraschallwandler der Ultraschall-Messvorrichtung (8) den Kalibrier-Ultraschallempfänger (18b) bildet und dass der Kalibrier-Reflektor (18c) benachbart zur Sperrvorrichtung (5) angeordnet ist, sodass der Kalibrier-Reflektor (18c) zumindest einen Teil des von dem Kalibrier-Ultraschallsender (18a) emittierten Sendesignals zu dem Kalibrier-Ultraschallempfänger (18b) reflektiert.

8. Absperrorgan (1) nach einem der Ansprüche 1 bis 6, **dadurch gekennzeichnet, dass** der Kalibrier-Ultraschallsender (18a) und der Kalibrier-Ultraschallempfänger (18b) durch jeweils einen als Sender und Empfänger ausgebildeten Ultraschallwandler gebildet werden, wobei der Kalibrier-Ultraschallsender (18a) und der Kalibrier-Ultraschallempfänger (18b) verschieden sind von Ultraschallwandlern der Ultraschall-Messvorrichtung.

9. Absperrorgan (1) nach Anspruch 8, **dadurch gekennzeichnet, dass** der Kalibrier-Ultraschallsender (18a), der Kalibrier-Ultraschallempfänger (18b) und der Kalibrier-Reflektor (18c) einen V-förmigen Kalibrier-Messpfad (17) im Einlaufbereich, also zwischen der Einströmöffnung (3a) und der Sperrvorrichtung (5), oder im Auslaufbereich, also zwischen der Sperrvorrichtung (5) und der Ausströmöffnung (3b) des Strömungskanals (4) bilden.

10. Absperrorgan (1) nach einem der Ansprüche 1 bis 9, **dadurch gekennzeichnet, dass** die Steuer- und/oder Auswerteeinrichtung (10) über den Kalibrier-Messpfad (17) eine Laufzeitmessung durchführt und mittels der Laufzeitmessung die Strömungsgeschwindigkeit bestimmt.

## Claims

1. Shut-off device (1) for a fluid, with a housing (2) conducting the fluid, with an inflow opening (3a) for the fluid, which opening is provided in the housing (2) and with an outflow opening (3b) for the fluid, which opening is provided in the housing (2), with a flow channel (4) formed in the housing (2) for the fluid between the inflow opening (3a) and the outflow opening (3b), and with a blocking device (5) arranged in the flow channel (4), wherein the blocking device (5) has a blocking body receptacle (6) and a blocking body (7) movable in the blocking body receptacle (6), wherein the flow cross-section for the fluid in the blocking device (5) and thus in the flow channel (4) can be changed by moving the blocking body (7) in the blocking body receptacle (6), wherein an ultrasonic measuring device (8) is arranged in or aligned on the housing (2) such that the position of the blocking body (7) can be determined by means of the ultrasonic measuring device (8), wherein by a control and/or evaluation unit (10), wherein the control and/or evaluation unit (10) controls the ultrasonic measuring device (8) to emit a transmitted signal (13), the transmitted signal (13) is reflected at the blocking body (7) and the control and/or evaluation unit (10) detects the reflected signal (14) and the control and/or evaluation unit (10) determines the position of the blocking body (7) and/or the change in the position of the blocking body (7) by evaluating at least the reflected signal (14),
**characterized in**
**that** that the control and/or evaluation unit (10) determines the acoustic velocity in the fluid itself by means of a measurement with ultrasonic signals in the fluid conducted in the housing (2) to determine the position of the blocking body (7), wherein a calibration measuring path (17) is formed in the flow channel (4) for determining the acoustic velocity in the fluid conducted in the housing, with at least one calibration ultrasonic transmitter (18a), at least one calibration ultrasonic receiver (18b) and preferably at least one calibration reflector (18c), wherein the calibration measuring path (17) is independent of the position of the blocking body (7) and the calibration measuring path (17) is traversed by a measuring signal in both possible traversing directions.

2. Shut-off device (1) according to claim 1, **characterized in that** the ultrasonic measuring device (8) has an ultrasonic transducer designed as a transmitter and receiver or that the ultrasonic measuring device (8) has an ultrasonic transducer designed as a transmitter and a separate ultrasonic transducer designed as a receiver.

3. Shut-off device (1) according to claim 1 or 2, **characterized in that** the position of the blocking body (7) is determined by the control and/or evaluation unit (10) by evaluating the intensity of the reflected signal (14), by measuring the transit time, by determining the phase difference between the transmitted signal (13) and the reflected signal (14) or by determining the frequency difference between the transmitted signal (13) and the reflected signal (14).

4. Shut-off device (1) according to any one of claims 1 to 3, **characterized in that** the control and/or evaluation unit (10) controls the ultrasonic measuring device (8) for emitting a transmitted signal (13) of high intensity for cleaning the blocking device (5), in particular for cleaning the blocking body (7) of the blocking device (5).

5. Shut-off device (1) according to any one of claims 1 to 4, **characterized in that** the position of the blocking body (7) determined by the control and/or evaluation unit (10) is compared to a reference position of the blocking body (7) by the control and/or evaluation unit (10), in particular wherein the reference position of the blocking body (7) is a desired position of the blocking body (7) or a position of the blocking body (7) determined by other means.

6. Shut-off device (1) according to any one of claims 1 to 5, **characterized in that** the blocking device (5) is designed as a valve with an axially movable closure part with a sealing surface (15) as blocking body (7) and with a seal seat (16) formed in the blocking body receptacle (6) for sealing with the sealing surface (15) of the blocking body (7) in the closed state, or that the blocking device (5) is designed as a gate valve, shut-off valve or as a ball valve.

7. Shut-off device (1) according to any one of claims 1 to 6, **characterized in that** the ultrasonic transducer of the ultrasonic measuring device (8) designed as a transmitter forms the calibration ultrasonic transmitter (18a), that the ultrasonic transducer of the ultrasonic measuring device (8) designed as a receiver forms the calibration ultrasonic receiver (18b), and that the calibration reflector (18c) is arranged adjacent to the blocking device (5) so that the calibration reflector (18c) reflects at least part of the transmitted signal emitted by the calibration ultrasonic transmitter (18a) to the calibration ultrasonic receiver (18b).

8. Shut-off device (1) according to any one of claims 1 to 6, **characterized in that** the calibration ultrasonic transmitter (18a) and the calibration ultrasonic receiver (18b) are each formed by an ultrasonic transducer designed as a transmitter and receiver, wherein the calibration ultrasonic transmitter (18a) and the calibration ultrasonic receiver (18b) are different from the ultrasonic transducers of the ultrasonic measuring device.

9. Shut-off device (1) according to claim 8, **characterized in that** the calibration ultrasonic transmitter (18a), the calibration ultrasonic receiver (18b) and the calibration reflector (18c) form a V-shaped calibration measuring path (17) in the inlet region, i.e. between the inflow opening (3a) and the shut-off device (5), or in the outlet region, i.e. between the shut-off device (5) and the outflow opening (3b) of the flow channel (4).

10. Shut-off device (1) according to any one of claims 1 to 9, **characterized in that** the control and/or evaluation unit (10) carries out a transit time measurement via the calibration measuring path (17) and determines the flow velocity by means of transit time measurement.

## Revendications

1. Organe d'arrêt (1) pour un fluide, comportant un boîtier (2) guidant le fluide, une ouverture d'entrée (3a) pour le fluide prévue dans le boîtier (2) et une ouverture de sortie (36) pour le fluide prévue dans le boîtier (2), un canal d'écoulement (4) pour le fluide, réalisé dans le boîtier (2) entre l'ouverture d'entrée (3a) et l'ouverture de sortie (3b), et comportant un dispositif d'arrêt (5) disposé dans le canal d'écoulement (4), dans lequel le dispositif d'arrêt (5) comporte un logement de corps d'arrêt (6) et un corps d'arrêt (7) mobile dans le logement de corps d'arrêt (6), dans lequel le déplacement du corps d'arrêt (7) dans le logement de corps d'arrêt (6) permet de modifier la section transversale d'écoulement du fluide dans le dispositif d'arrêt (5) et donc dans le canal d'écoulement (4), dans lequel un dispositif de mesure à ultrasons (8) est disposé et orienté dans ou sur le boîtier (2) de manière à ce que la position de réglage du corps d'arrêt (7) puisse être déterminée à l'aide du dispositif de mesure à ultrasons (8), dans lequel il est prévu un dispositif de commande et/ou d'évaluation (10), dans lequel le dispositif de commande et/ou d'évaluation (10) commande le dispositif de mesure à ultrasons (8) pour l'émission d'un signal d'émission (13), le signal d'émission (13) est réfléchi sur le corps d'arrêt (7) et le dispositif de commande et/ou d'évaluation (10) acquiert le signal de réflexion (14) et le dispositif de commande et/ou d'évaluation (10) détermine la position de réglage du corps d'arrêt (7) et/ou la modification de la position de réglage du corps d'arrêt (7) en évaluant au moins le signal de réflexion (14),
**caractérisé en ce que**
le dispositif de commande et/ou d'évaluation (10) détermine la vitesse du son dans le fluide pour déterminer la position de réglage du corps d'arrêt (7) au moyen d'une mesure utilisant des signaux ultrasonores dans le fluide guidé dans le boîtier (2) lui-même, dans lequel, pour déterminer la vitesse du son dans le fluide guidé dans le boîtier, un trajet de mesure d'étalonnage (17) est réalisé dans le canal d'écoulement (4), lequel comporte au moins un émetteur à ultrasons d'étalonnage (18a), au moins un récepteur à ultrasons d'étalonnage (18b) et de préférence au moins un réflecteur d'étalonnage (18c), dans lequel le trajet de mesure d'étalonnage (17) est indépendant de la position de réglage du corps d'arrêt (7) et le trajet de mesure d'étalonnage (17) est parcouru par un signal de mesure dans les deux sens de parcours possibles.

2. Organe d'arrêt (1) selon la revendication 1, **caractérisé en ce que** le dispositif de mesure à ultrasons (8) comporte un transducteur à ultrasons réalisé sous la forme d'un émetteur et d'un récepteur ou **en ce que** le dispositif de mesure à ultrasons (8) comporte un transducteur à ultrasons réalisé sous la forme d'un émetteur et un transducteur à ultrasons séparé de celui-ci et réalisé sous la forme d'un récepteur.

3. Organe d'arrêt (1) selon la revendication 1 ou 2, **caractérisé en ce que** la position de réglage du corps d'arrêt (7) est déterminée par le dispositif de commande et/ou d'évaluation (10) en évaluant l'intensité du signal de réflexion (14), en mesurant le temps de propagation, en déterminant la différence de phase entre le signal d'émission (13) et le signal de réflexion (14) ou en déterminant la différence de fréquence entre le signal d'émission (13) et le signal de réflexion (14).

4. Organe d'arrêt (1) selon l'une quelconque des revendications 1 à 3, **caractérisé en ce que** le dispositif de commande et/ou d'évaluation (10) commande le dispositif de mesure à ultrasons (8) pour l'émission d'un signal d'émission (13) de haute intensité destiné à nettoyer le dispositif d'arrêt (5), notamment à nettoyer le corps d'arrêt (7) du dispositif d'arrêt (5) .

5. Organe d'arrêt (1) selon l'une quelconque des revendications 1 à 4, **caractérisé en ce que** la position de réglage du corps d'arrêt (7) déterminée par le dispositif de commande et/ou d'évaluation (10) est comparée par le dispositif de commande et/ou d'évaluation (10) à une position de réglage comparative du corps d'arrêt (7), notamment dans lequel la position de réglage comparative du corps d'arrêt (7) est une position de consigne du corps d'arrêt (7) ou une position de réglage du corps d'arrêt (7) déterminée d'une autre manière.

6. Organe d'arrêt (1) selon l'une quelconque des revendications 1 à 5, **caractérisé en ce que** le dispositif d'arrêt (5) est réalisé sous la forme d'une vanne comportant une partie d'obturation mobile axialement et comportant une surface d'étanchéité (15) réalisée sous la forme d'un corps d'arrêt (7), et comportant un siège d'étanchéité (16) réalisé dans le logement (6) du corps d'arrêt pour assurer l'étanchéité à l'état fermé avec la surface d'étanchéité (15) du corps d'arrêt (7), ou **en ce que** le dispositif d'arrêt (5) est réalisé sous la forme d'une vanne d'arrêt, d'un clapet d'arrêt ou d'un robinet à boisseau sphérique.

7. Organe d'arrêt (1) selon l'une quelconque des revendications 1 à 6, **caractérisé en ce que** le transducteur à ultrasons du dispositif de mesure à ultrasons (8), réalisé sous la forme d'un émetteur, constitue l'émetteur à ultrasons d'étalonnage (18a), **en ce que** le transducteur à ultrasons du dispositif de mesure à ultrasons (8), réalisé sous la forme d'un récepteur, constitue le récepteur à ultrasons d'étalonnage (18b) et **en ce que** le réflecteur d'étalonnage (18c) est disposé à proximité du dispositif d'arrêt (5), de sorte que le réflecteur d'étalonnage (18c) réfléchit au moins une partie du signal d'émission émis par l'émetteur à ultrasons d'étalonnage (18a) vers le récepteur à ultrasons d'étalonnage (18b).

8. Organe d'arrêt (1) selon l'une quelconque des revendications 1 à 6, **caractérisé en ce que** l'émetteur à ultrasons d'étalonnage (18a) et le récepteur à ultrasons d'étalonnage (18b) sont respectivement constitués par un transducteur à ultrasons réalisé sous la forme d'un émetteur et d'un récepteur, dans lequel l'émetteur à ultrasons d'étalonnage (18a) et le récepteur à ultrasons d'étalonnage (18b) sont différents des transducteurs à ultrasons du dispositif de mesure à ultrasons.

9. Organe d'arrêt (1) selon la revendication 8, **caractérisé en ce que** l'émetteur à ultrasons d'étalonnage (18a), le récepteur à ultrasons d'étalonnage (18b) et le réflecteur d'étalonnage (18c) forment un trajet de mesure d'étalonnage en forme de V (17) dans la zone d'entrée, c'est-à-dire entre l'ouverture d'entrée (3a) et le dispositif d'arrêt (5), ou dans la zone de sortie, c'est-à-dire entre le dispositif d'arrêt (5) et l'ouverture de sortie (3b) du canal d'écoulement (4).

10. Organe d'arrêt (1) selon l'une quelconque des revendications 1 à 9, **caractérisé en ce que** le dispositif de commande et/ou d'évaluation (10) met en œuvre une mesure du temps de parcours par l'intermédiaire du trajet de mesure d'étalonnage (17) et détermine la vitesse d'écoulement au moyen de la mesure du temps de parcours.
